# EUROPEAN PATENT APPLICATION

(11) **EP 4 617 091 A1**
(43) Date of publication of application: **17.09.2025**
(21) Application number: 22965104.7
(22) Date of filing: 09.11.2022
(51) Int. Cl.: B60K 1/00, B60K 6/40

(54) **INSTALLATION STRUCTURE FOR ELECTRONIC UNIT AT REAR SECTION OF VEHICLE**

(71) Applicant: Nissan Motor Co., Ltd., Kanagawa 220-8623 (JP)
(72) Inventor: OZAKI, Michio, Atsugi-shi, Kanagawa 243-0123 (JP); OOKI, Kazuhiro, Atsugi-shi, Kanagawa 243-0123 (JP)
(74) Representative: Hoefer & Partner Patentanwälte mbB
(86) International application number: PCT/JP2022/041630
(87) International publication number: WO 2024/100779

(57) **Abstract**

An installation structure of an electronic unit (2) at a rear section of a vehicle includes the electronic unit (2), and a wheelhouse (5) of a rear wheel (6), which is formed by a body panel (P) of the vehicle. The electronic unit (2) is positioned along an in-vehicle inner surface of the wheelhouse (5) and attached to the body panel (P) via plural first fixing points. In addition, the electronic unit (2) is positioned forward from a rearmost end of a road wheel (60) of the rear wheel (6) within the wheelhouse (5) in the side view.

## Description

### TECHNICAL FIELD

The present invention relates to an installation structure of an electronic unit at a rear section of a vehicle.

### BACKGROUND ART

Patent Literature 1 listed below discloses an installation structure of an electronic unit at a rear section of a vehicle. In the installation structure, the electronic unit is fixed on a floor of a luggage compartment at the rear section of the vehicle. The electronic unit of the Patent Literature 1 is an inverter that converts high-voltage DC power stored in a battery for vehicle running installed on the vehicle into high-voltage AC power to be supplied to a motor for vehicle running. In addition, a cover for covering the electronic unit is also fixed onto the floor to protect the electronic unit from an impact load in the event of a vehicle rear-end collision.

### CITATION LIST

### PATENT LITERATURE

Patent Literature 1: Japanese Patent Application Publication No. 2019-131132

### SUMMARY OF INVENTION

### PROBLEM TO BE SOLVED

A rear panel of the vehicle body and the floor panel of the luggage compartment may be deformed during the vehicle rear-end collision, and thus these panels may contact with the electronic unit. Alternatively, the deformation of the floor panel of the luggage compartment may cause the electronic unit to contact with a rear seat positioned in front of it. If the electronic unit is damaged due to the contact with the panels or the like, a short circuit may occur in the electronic unit.

An object of the present invention is to provide an installation structure of an electronic unit at a rear section of a vehicle that can improve collision safety.

### SOLUTION TO PROBLEM

An installation structure of an electronic unit at a rear section of a vehicle according to an aspect of the present invention includes the electronic unit, and a wheelhouse of a rear wheel, which is formed by a body panel of the vehicle. The electronic unit is positioned along an in-vehicle inner surface of the wheelhouse and attached to the body panel via plural first fixing points. In addition, the electronic unit is positioned forward from a rearmost end of a road wheel of the rear wheel within the wheelhouse in the side view.

### ADVANTAGEOUS EFFECTS

According to the aspect, it is possible to provide an installation structure of an electronic unit at a rear section of a vehicle that can improve collision safety.

### BRIEF DESCRIPTION OF DRAWINGS

[FIG. 1] Fig. 1 is a partially cross-sectioned perspective view of an installation structure of an electronic unit at a rear section of a vehicle according to an embodiment.
[FIG. 2] Fig. 2 is a front view of the installation structure.
[FIG. 3] Fig. 3 is a perspective view of an assembly of the electronic unit.
[FIG. 4] Fig. 4 is an exploded perspective view of the assembly.
[FIG. 5] Fig. 5 is a cross-sectional view of the assembly.

### DESCRIPTION OF EMBODIMENTS

Hereinafter, an embodiment of an installation structure of an electronic unit at a rear section of a vehicle will be described with reference to the drawings.

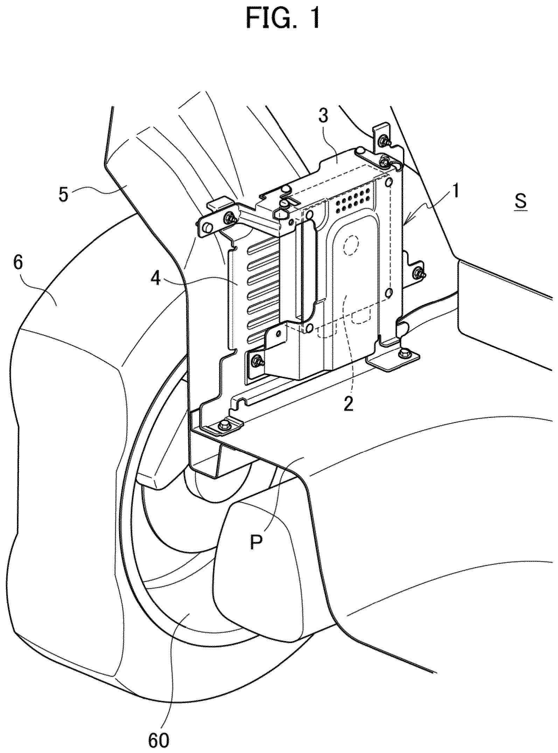

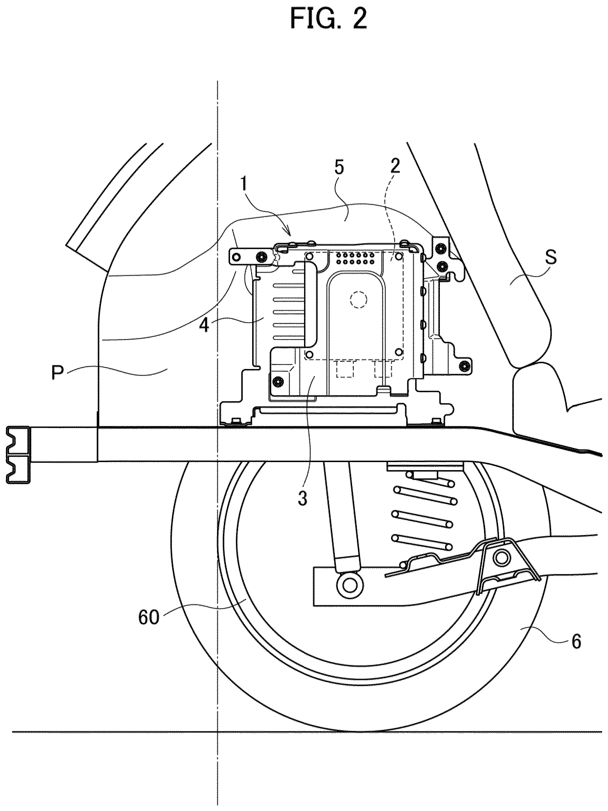

As shown in Fig. 1 and Fig. 2, in the installation structure according to the present embodiment, the electronic unit 2 is installed at the rear section of the vehicle as a unit assembly 1, more specifically installed in a luggage compartment formed behind a rear seat S. The unit assembly 1 includes a cover 3 and a bracket 4 in addition to the electronic unit 2. The electronic unit 2 in the present embodiment is a DC-AC inverter that converts DC power of a high-voltage battery installed on the vehicle into AC power for using electrical appliances (the voltage is 100V in Japan, 120V in North America, 220-240V in Europe, China, etc.). The electronic unit 2 is a high-voltage component and is to be protected in the event of a rear-end collision of the vehicle to prevent short circuits within it or the like. Therefore, the electronic unit 2 is housed inside a protective case formed by the cover 3 and the bracket 4.

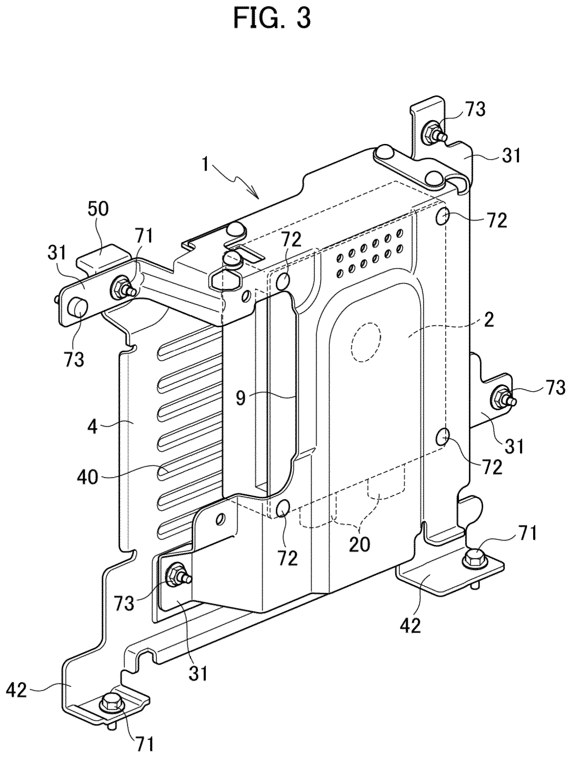

The unit assembly 1 is fixed to a body panel P of the vehicle so as to be positioned along an in-vehicle inner surface of a wheelhouse 5 of a rear wheel 6 formed by the body panel P. The unit assembly 1 is fixed to the body panel P at plural first fixing points 71 (see Fig. 3). In the present embodiment, the unit assembly 1 is fixed to the body panel P at four of the first fixing points 71. In order to improve storage in the luggage compartment, the unit assembly 1 is positioned along a surface of an inner wall of the wheelhouse 5 instead of along a floor of the luggage compartment.

The cover 3 and the bracket 4 in the present embodiment, which form the protective case of the electronic unit 2, are formed by press-forming high-tensile steel sheets. The electronic unit 2 is fixed to the inner surface of the cover 3 at plural second fixing points 72 (see Fig. 3). In the present embodiment, the electronic unit 2 is fixed to the cover 3 at four of the second fixing points 72 at four corners of the electronic unit 2. The cover 3 is fixed to the inner surface of the bracket 4 at plural third fixing points 73 (see Fig. 3). In the present embodiment, the cover 3 is fixed to the bracket 4 at four of the third fixing points 73 at four corners of the bracket 4.

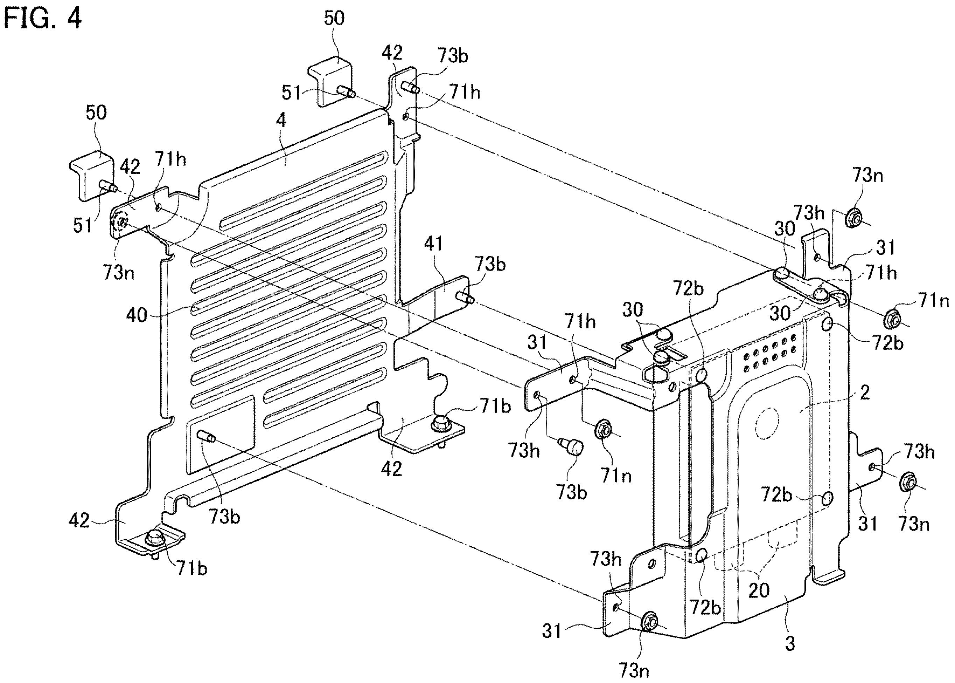

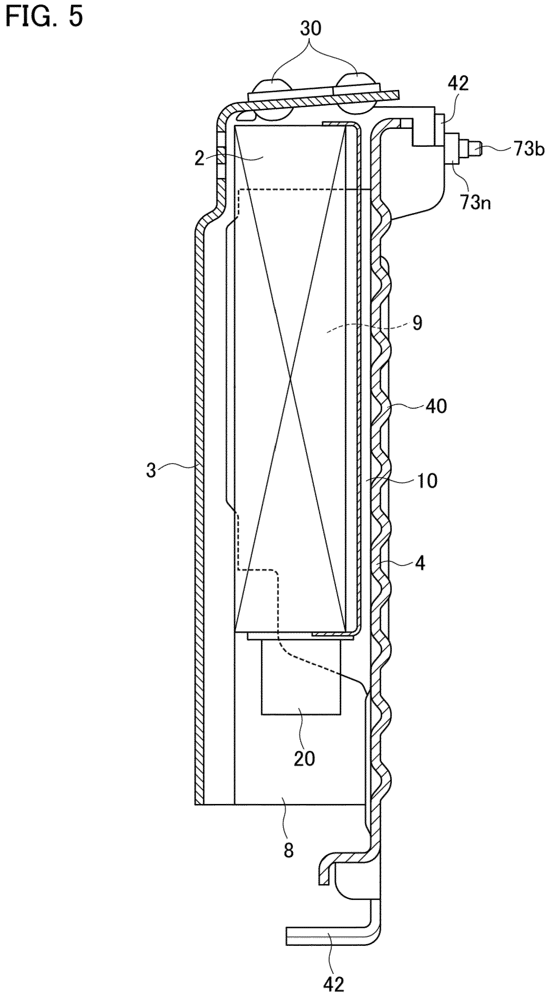

As shown in Fig. 3 and Fig. 4, the cover 3 is formed in a box shape by fixing a press-formed steel plate at several points by rivets 30. When the box-shaped cover 3 is attached to the flat bracket 4 to form the protective cover, an opening 8 (see Fig. 5) is formed at its lower portion and an opening 9 is also formed at its rear portion. The lower opening 8 is an opening for harness connections and cooling-air intake. A duct (not shown in the drawings) for cooling-air discharge is connected to the rear opening 9.

First extended portions 31 extend forward from an upper portion and a lower portion of a front edge of the cover 3, respectively. The first extended portions 31 are also extend rearward from an upper portion and a lower portion of a rear edge of the cover 3, respectively. The above-described third fixing points 73 for the cover 3 and the bracket 4 are provided on the four first extended portions 31, respectively. Bolt holes 73h for the third fixing points 73 are formed on the first extended portions 31, respectively. In addition, the above-described first fixing points 71 for the bracket 4 (the unit assembly 1) and the body panel P (the wheelhouse 5) are also provided on the upper two first extended portions 31, respectively. Bolt holes 71h for the first fixing points 71 are also formed on the upper two first extended portions 31, respectively. The central axes of all the bolt holes 71h and 73h on the cover 3 are horizontal.

The bracket 4 is formed to have a nearly-flat shaped plate. Second extended portions 42 extend forward from an upper and a lower portion of a front edge of the bracket 4, respectively. The second extended portions 42 also extend rearward from an upper portion and a lower portion of a rear edge of the bracket 4, respectively. The lower two second extended portions 42 at the lower portions extend forward and downward or rearward and downward, and each of their lowest portions is bent at a right angle. The above-described first fixing points 71 for the bracket 4 (the unit assembly 1) and the body panel P are formed on the four second extended portions 42, respectively. At the upper two first fixing points 71, the bracket 4 (the unit assembly 1) is fixed to the body panel P forming the wheelhouse 5 via sub-brackets 50 welded to the in-vehicle inner surface of the wheelhouse 5. At the lower two first fixing points 71, the bracket 4 (the unit assembly 1) is fixed to the body panel P forming the floor of the luggage compartment.

The bolt holes 71h for the first fixing points 71 are formed on the four second extended portions 42, respectively. The central axes of the bolt holes 71h formed on the upper two second extended portions 42 are horizontal, but the central axes of the bolt holes on the lower two second extended portions 42 are vertical. In addition, a weld bolt 73b for the above-described third fixing point 73 for the cover 3 and the bracket 4 protrudes from the upper-front second extended portion 42 toward the inside of the luggage compartment. Furthermore, a weld nut 73n for the above-described third fixing point 73 for the cover 3 and the bracket 4 is provided on the upper-rear second extended portion 42.

A sub extended portion 41 extends forward from a lower portion of the front edge of the bracket 4, but it is positioned slightly above the lower second extended portion 42. The above-described third fixing point 73 for the cover 3 and the bracket 4 is provided on the sub extended portion 41. The weld bolt 73b for the third fixing point 73 protrudes from the sub extended portion 41 toward the inside of the luggage compartment. In addition, the above-described third fixing point 73 for the cover 3 and the bracket 4 is also provided at a lower rear portion of the rear section of the bracket 4, but it is positioned slightly above the lower second extended portion 42. At this third fixing point 73, the weld bolt 73b protrudes from the bracket 4 toward the inside of the luggage compartment.

Plural beads extending in a front-back direction are formed at a center plate portion of the bracket 4, excluding the above-mentioned extended portions 41 and 42, to improve strength and rigidity of the center plate portion. Flanges are also formed along a periphery of the center plate portion, and the flanges also contributes to the improvements of the strength and rigidity of the center plate portion.

Fixing configuration of the unit assembly 1 at the above-mentioned fixing points 71 to 73 will be described. First, the second fixing point 72 for the electronic unit 2 and the cover 3 is described. Screw holes are respectively formed at four corners of the electronic unit 2 and bolt holes are formed on the cover 3 so as to correspond to these screw holes. The electronic unit 2 is fixed to the inside of the cover 3 by fastening Phillips round-headed bolts 72b inserted into the bolt holes on the cover 3.

Next, the upper-front fixing points will be described. A weld bolt 51 for the first fixing point 71 protrudes from the above-mentioned sub-bracket 50 toward the inside of the luggage compartment. This weld bolt 51 is inserted into the bolt hole 71h of the second extended portion 42 of the bracket 4 and the bolt hole 71h of the first extended portion 31 of the cover 3, and then a hexagonal nut 71n is fastened to the weld bolt 51 to form the first fixing point 71. The weld bolt 73b of the second extended portion 42 of the bracket 4 is inserted into the bolt hole 73h of the first extended portion 31 of the cover 3, and then a hexagonal nut 73n is fastened to the weld bolt 73b to form the third fixing point 73. Here, the third fixing point is located above the first fixing point 71.

The rear-upper fixing points will be described. The weld bolt 51 of the sub-bracket 50 is inserted into the bolt hole 71h of the second extended portion 42 of the bracket 4 and the bolt hole 71h of the first extended portion 31 of the cover 3, and then a hexagonal nut 71n is fastened to the weld bolt 51 to form the first fixing point 71. In addition, an internal hexagonal bolt 73b inserted into the bolt hole 73h of the first extended portion 31 of the cover 3 is fastened to the weld nut 73n of the second extended portion 42 of the bracket 4 to form the third fixing point 73. Here, the third fixing point is located on a rear side of the first fixing point 71. At these upper fixing points, the bolts and the nuts are fastened horizontally from the inside of the luggage compartment.

At each of the two lower first fixing points 71, a hexagonal bolt 71b inserted into a bolt hole formed on the second extended portion 42 of the bracket 4 is vertically fastened to a weld nut welded to the body panel P that forms the floor of the luggage compartment. In addition, the weld bolt 73b of the sub extended portion 41 extended from the front edge of the bracket 4 is inserted into the bolt hole 73h of the front-lower first extended portion 31 of the cover 3, and then a hexagonal nut 73n is fastened to the weld bolt 73b to form the third fixing point 73. This hexagonal nut 73n is fastened horizontally from the inside of the luggage compartment. Furthermore, the rear weld bolt 73b of the bracket 4 is inserted into the bolt hole 73h of the rear-lower first extended portion 31 of the cover 3, and then a hexagonal nut 73n is fastened to the weld bolt 73b to form the third fixing point 73. This hexagonal nut 73n is also fastened horizontally from the inside of the luggage compartment.

The cover 3 is fixed to the bracket 4 in this manner, and the electronic unit 2 is disposed between the cover 3 and the bracket 4. Here, a clearance 10 is formed between the electronic unit 2 and the bracket 4, as shown in Fig. 5. In addition, the cover 3 is positioned closer to the upper end of the bracket 4 than to the lower end of the bracket 4 and is fixed to the bracket 4. The electronic unit 2 has harness connecting portions 20 at its lower portion, and the harness connecting portions 20 are directed to the above-mentioned lower opening 8. Accordingly, harnesses (not shown in the drawings) connected to the electronic unit 2 are led downward from the unit assembly 1 through the lower opening 8. Although not shown in the drawings, the unit assembly 1 and the harnesses are concealed by a trim attached to the body panel P so as to cover them.

In the installation structure according to the present embodiment that is constructed as described above, the electronic unit 2 is positioned along the in-vehicle inner surface of the wheelhouse 5 of the rear wheel 6, which is formed by the body panel P. Since the electronic unit 2 is not installed on the floor of the inside of the vehicle, the inner space of the vehicle can be effectively utilized. Especially, since the electronic unit 2 is installed in the luggage compartment in the present embodiment, it becomes possible to utilize the floor surface in the luggage compartment effectively.

Furthermore, in a side view viewed from a side of the vehicle as shown in Fig. 2, the unit assembly 1 is positioned forward from the rearmost end of a road wheel 60 of the rear wheel 6 in the wheelhouse 5. Here, in the unit assembly 1, the cover 3 is positioned closer to the front end of the bracket 4 than to the rear end of the bracket 4 and is fixed to the bracket 4. Therefore, in the side view, the electronic unit 2 fixed to the cover 3 is also positioned forward from the rearmost end of the road wheel 60 of the rear wheel 6 in the wheelhouse 5. A single dashed line in Fig. 2 shows a vertical plane including the rearmost end of the road wheel 60. Note that a cross-section shown in Fig. 1 is the vertical plane including the rearmost end of the road wheel 60.

In addition, in the side view, a projected area of the bracket 4 is larger than a projected area of the cover 3 and the projected area of the cover 3 is larger than a projected area of the electronic unit 2. Furthermore, the electronic unit 2 completely overlaps with the bracket 4 in the side view.

Hereinafter, advantages of the above-described installation structure will be explained.

According to the installation structure of the present embodiment, the electronic unit 2 is positioned along the in-vehicle inner surface of the wheelhouse 5 of the rear wheel 6, which is formed by the body panel P. Since the electronic unit 2 does not occupy space on the floor, the interior space at the rear section of the vehicle can be utilized effectively. Since the electronic unit 2 is attached to the body panel P via the plural first fixing points 71, the electronic unit 2 is not easily detached from the body panel P even if the body panel P is deformed in the event of a vehicle rear-end collision, and is not easily damaged during the vehicle rear-end collision. The electronic unit 2 is positioned forward from the rearmost end of the road wheel 60 of the rear wheel 6 within the wheelhouse 5 in the side view. During the vehicle rear-end collision, the collision energy is absorbed while the rear section of the vehicle is collapsed by an obstacle. The electronic unit 2 is protected during the collision, because the impact energy is absorbed while the wheelhouse 5 is collapsed by the obstacle. Furthermore, the road wheel 60 prevents the obstacle from stroking forward with respect to the vehicle body, so that the electronic unit 2 can be also prevented from contacting the obstacle and the electronic unit 2 is more reliably protected.

In addition, since the electronic unit 2 is disposed between the cover 3 and the bracket 4 in the installation structure of the present embodiment, the electronic unit 2 can be securely protected by the cover 3 and the bracket 4. Here, since the electronic unit 2 is fixed to the cover 3 at the plural second fixing points 72, the electronic unit 2 is not easily detached from the cover 3 during a vehicle rear-end collision. Furthermore, since the cover 3 is also fixed to the bracket 4 at the plural third fixing points 73, the cover 3 is not easily detached from the bracket 4, either. Therefore, the electronic unit 2 is securely protected between the cover 3 and the bracket 4 by the cover 3 and the bracket 4. Here, the electronic unit 2 is fixed to the cover 3, not to the bracket 4. The deformation of the body panel P during a vehicle rear-end collision first affects the bracket 4, which is closer to the body panel P than to the cover 3. Then, the electronic unit 2 is then affected through the cover 3, which is affected by the bracket 4. In other words, the electronic unit 2 is not directly affected by the deformation of the body panel P, but is affected through the bracket 4 and the cover 3, so that it can be protected more reliably.

Especially in the present embodiment, strength and rigidity of the portion of the bracket 4 facing the electronic unit 2 is increased by the beads 40, and the clearance 10 is formed between the bracket 4 and the electronic unit 2. Therefore, the center plate portion of the bracket 4 is restricted from deforming, and thereby the bracket 4 is prevented from directly contacting with the electronic unit 2.

Furthermore, according to the installation structure of the present embodiment, the cover 3 includes the plural first extended portions 31 extended forward or rearward, and the plural third fixing points 73 for the cover 3 and the bracket 4 are provided at the plural first extended portions 31, respectively. Therefore, when the impact load is transmitted from the bracket 4 to the cover 3, the collision energy is absorbed also by the deformation of the first extended portions 31. Furthermore, even if the electronic unit 2 fixed to the cover 3 should contact with the bracket 4, the load input to the electronic unit 2 will be avoided by the deformation of the first extended portions 31. As a result, the electronic unit 2 can be more securely protected.

Furthermore, according to the installation structure of the present embodiment, the cover 3 is positioned closer to the front end of the bracket 4 than to the rear end of the bracket 4 and is fixed to the bracket 4. Therefore, the electronic unit 2 is less affected by the deformation of the body panel P from the rear during the rear-end collision. Here, in the side view, the projected area of the bracket 4 is larger than the projected area of the cover 3 and the projected area of the cover 3 is larger than the projected area of the electronic unit 2. In addition, the electronic unit 2 completely overlaps the bracket 4 in the side view. Therefore, the deformation of the body panel P from the rear affects the bracket 4 and the cover 3, in this order, and then affects the electronic unit 2 at last. In other words, the electronic unit 2 is least affected. Furthermore, since the electronic unit 2 is completely covered by the bracket 4, the affection on the electronic unit 2 due to the deformation of the body panel P is definitely suppressed by the bracket 4.

Furthermore, according to the installation structure of the present embodiment, the bracket 4 also includes the plural second extended portions 42 extended forward or backward, and the plural first fixing points 71 for the bracket 4 and the body panel P are provided at the plural second extended portions 42, respectively. Therefore, when the impact load is transmitted from the body panel P to the bracket 4, the collision energy is also absorbed by the deformation of the second extended portions 42. Furthermore, even if the bracket 4 should contact with the electronic unit 2, the load input to the electronic unit 2 will be avoided by the deformation on not only the first extended portions 31 but also the second extended portions 42 of the cover 3. As a result, the electronic unit 2 can be more securely protected.

Especially in the present embodiment, at the upper two first fixing points 71, not only the bracket 4 is fixed to the body panel P (the wheelhouse 5), but also the cover 3 is fixed to the bracket 4 and the body panel P (the wheelhouse 5) by being fastened together. Therefore, the upper two first fixing points 71 can function as well as the third fixing points 73 for the cover 3 and the bracket 4 to make the cover 3 less likely to drop off from the bracket 4, and thus the protection for the electronic unit 2 can be further improved. Furthermore, the front-lower third fixing point 73 is also provided at the sub extended portion 41 of the bracket 4 also at the first extended portion 31 of the cover 3 in the present embodiment. Therefore, when the impact load is transmitted from the bracket 4 to the cover 3, not only the first extended portion 31 but also the sub extended portion 41 is deformed to absorb the collision energy further. Therefore, even if the electronic unit 2 should contact with the bracket 4, the load input to the electronic unit 2 is avoided by the deformation of the sub extended portion 41 in addition to the first extended portions 31 and the second extended portions 42. As a result, the electronic unit 2 can be more securely protected.

Furthermore, according to the installation structure of the present embodiment, the cover 3 is positioned closer to the upper end of the bracket 4 than to the lower end of the bracket 4 and is fixed to the bracket 4. The lower opening 8 is formed between the lower end of the cover 3 and the bracket 4, and the electronic unit 2 has the harness connecting portions 20 directed to the lower opening 8. Therefore, it becomes easier to route the harnesses connected to the electronic unit 2 along the floor panel and thus the handling of the harnesses is improved. Although the connecting portions between the harness connecting portions 20 and the harnesses are structurally fragile, the electronic unit 2 including the harness connecting portions 20 is protected between the cover 3 and the bracket 4 and thus the fragile connecting portions can be also protected. Since the bracket 4 is interposed between the harnesses connected to the harness connecting portions 20 and the wheelhouse 5 to be deformed in the event of a vehicle rear-end collision, the harnesses can be protected from the deformed wheelhouse 5 by the bracket 4.

The present invention is not limited to the above-described embodiment. For example, the unit assembly 1 (the bracket 4) is fixed to the floor panel of the luggage compartment at its lower two first fixing points 71 in the above embodiment. However, the unit assembly 1 (the bracket 4) may be fixed to the body panel P forming the wheelhouse 5 at its lower two first fixing points 71. In the above embodiment, the electronic unit 2 is a DC-AC inverter, but it is not limited to this.

### REFERENCE SIGNS LIST

- 2: electronic unit
- 20: harness connecting portion
- 3: cover
- 31: first extended portion
- 4: bracket
- 42: second extended portion
- 5: wheelhouse
- 6: rear wheel
- 60: road wheel
- 8: (lower) opening
- 71: first fixing point
- 72: second fixing point
- 73: third fixing point
- P: body panel

## Claims

1. An installation structure of an electronic unit at a rear section of a vehicle, the installation structure comprising:
the electronic unit; and
a wheelhouse of a rear wheel, which is formed by a body panel of the vehicle;
wherein the electronic unit is positioned along an in-vehicle inner surface of the wheelhouse and attached to the body panel via a plurality of first fixing points, and
wherein the electronic unit is positioned forward from a rearmost end of a road wheel of the rear wheel within the wheelhouse in a side view.

2. The installation structure of the electronic unit at the rear section of the vehicle, according to claim 1, further comprising
a cover on which the electronic unit is fixed to at a plurality of second fixing points, and
a bracket on which the cover is fixed to at a plurality third fixing points,
wherein the electronic unit is disposed between the cover and the bracket, and
wherein the bracket is fixed to the body panel at the first fixing points.

3. The installation structure of the electronic unit at the rear section of the vehicle, according to claim 2,
wherein the cover includes a plurality of first extended portions extended forward or rearward, and
wherein the plurality of third fixing points for the cover and the bracket are provided at the plurality of first extended portions, respectively.

4. The installation structure of the electronic unit at the rear section of the vehicle, according to claim 3,
wherein the cover is positioned closer to a front end of the bracket than to a rear end of the bracket and is fixed to the bracket,
wherein, in the side view, a projected area of the bracket is larger than a projected area of the cover and the projected area of the cover is larger than a projected area of the electronic unit, and
wherein the electronic unit completely overlaps with the bracket in the side view.

5. The installation structure of the electronic unit at the rear section of the vehicle, according to claim 4,
wherein the bracket includes a plurality of second extended portions extended forward or rearward, and
wherein the plurality of first fixing points for the bracket and the body panel are provided at the plurality of second extended portions, respectively.

6. The installation structure of the electronic unit at the rear section of the vehicle, according to claim 5,
wherein the cover is positioned closer to an upper end of the bracket than to a lower end of the bracket and is fixed to the bracket,
wherein an opening is formed between a lower end of the cover and the bracket, and
wherein the electronic unit includes a harness connecting portion directed to the opening.
